# EUROPÄISCHE PATENTSCHRIFT

(11) **EP 1 610 088 B1**
(45) Veröffentlichungstag und Bekanntmachung des Hinweises auf die Patenterteilung: **03.01.2007**
(21) Anmeldenummer: 04014638.3
(22) Anmeldetag: 22.06.2004
(51) Int. Cl.: G01B 9/02, G01B 9/04, G02B 21/00

(54) **Vorrichtung zum optischen Vermessen eines Objektes**
Device for optically measuring an object
Dispositif de mesure optique d'un objet

(43) Veröffentlichungstag der Anmeldung: 28.12.2005
(73) Patentinhaber: Polytec GmbH, 76337 Waldbronn (DE)
(72) Erfinder: Rembe, Dr. Christian, 76337 Waldbronn (DE)
(74) Vertreter: Kaiser, Magnus

(56) Entgegenhaltungen:
- EP-A- 0 352 789
- US-A- 4 844 617
- US-A- 6 084 672

## Beschreibung

Die Erfindung betrifft eine Vorrichtung zum optischen Vermessen eines Objektes, insbesondere zur Bewegungsmessung, nach dem Oberbegriff des Patentanspruchs 1.

Demnach umfasst die Vorrichtung ein Interferometer zur Messung von Bewegungen entlang der Achse des Messstrahls des Interferometers und ein Mikroskop mit einem Objektiv und einer Fokussiereinrichtung, wobei die Fokussiereinrichtung derart ausgeführt ist, dass sie die relative Lage des Objektes und des Fokus des Objektivs zueinander verändern kann, wobei das Interferometer und das Mikroskop einander zugeordnet sind, derart, dass der Messstrahl des Interferometers über den Strahlengang des Mikroskops auf das Objekt abgebildet wird.

Das Interferometer ermöglicht die Messung von Bewegungen entlang der Achse des Messstrahls, das heißt im allgemeinen von Bewegungen senkrecht zur Objektebene des Mikroskops. Im allgemeinen wird ein Laser-Dopplervibrometer eingesetzt, bei dem ein Messpunkt auf dem Objekt mit kohärentem Laserlicht beleuchtet wird. Die Bewegung der Oberfläche des Objekts resultiert in einer Dopplerverschiebung der Frequenz des an der Oberfläche reflektierten Lichtes. Eine Auswertung dieser Frequenzverschiebung, bzw. einer äquivalenten Phasenverschiebung mittels eines Demodulators ermöglicht die Ermittlung der Geschwindigkeit der Bewegung der Objektoberfläche am Messpunkt und aus dem Verlauf dieser Geschwindigkeiten können auch die Beschleunigungswerte der Objektoberfläche am Messpunkt berechnet werden. Der prinzipielle Aufbau einer solchen Messvorrichtung ist beispielsweise in der DE-Fachzeitschrift "Technisches Messen - tm" 57 (1990), Seiten 335 bis 345 beschrieben.

Zum Vermessen der Bewegungen von kleinen Objekten, insbesondere der Bewegungen oder Schwingungen von miniaturistierten Bauteilen in der Mikrosystemtechnik werden häufig Interferometer benutzt, deren Messstrahl über den Strahlengang eines Mikroskops auf das zu vermessende Objekt abgebildet wird.

Der Messstrahl des Interferometers kann so mittels des Mikroskops auf einen definierten Messpunkt auf dem Objekt gerichtet werden, wobei zweckmäßigerweise der zu vermessende Messpunkt auf dem Objekt in etwa im Fokus des Mikroskops zu liegen kommt, so dass der Messstrahl am Messpunkt eine möglichst geringe Ausdehnung aufweist und somit eine möglichst kleine Fläche auf dem Objekt beleuchtet, so dass eine hohe Ortsauflösung möglich ist.

So offenbart die US 6,084,672 A eine Vorrichtung zur optischen Vermessung eines Objektes, insbesondere zur Weg- und/oder Schwingungsmessung. Die Messung wird mittels eines Laser-Interferometers durchgeführt, wobei dessen Messstrahl in den Strahlengang eines Mikroskops eingekoppelt wird. Der von dem Objekt reflektierte Messstrahl wird wiederum aus dem Strahlengang des Mikroskops ausgekoppelt und in das Messsystem zurückgeführt. Weiterhin umfasst die Vorrichtung eine Einrichtung zum etwa parallelen Verschieben des Messstrahls, so dass mehrere, nebeneinanderliegende Punkte auf dem Objekt vermessen werden können, ohne das Messobjekt zu bewegen.

Der Erfindung liegt die Aufgabe zugrunde, eine Vorrichtung der eingangs genannten Art dahingehend zu verbessern, dass eine höhere Genauigkeit der Messung erzielt werden kann.

Gelöst ist diese Aufgabe durch eine Vorrichtung zum optischen Vermessen eines Objektes mit den Merkmalen des Patentanspruchs 1, sowie durch ein Verfahren mit den Merkmalen des Patentanspruchs 20.

Vorteilhafte Ausgestaltungen der erfindungsgemäßen Vorrichtung finden sich in den Patentansprüchen 2 bis 19; bevorzugte Weiterbildungen des erfindungsgemäßen Verfahrens sind in den Patentansprüchen 21 und 22 niedergelegt.

Die Erfindung unterscheidet sich vom vorbekannten Stand der Technik also grundlegend dadurch, dass das Mikroskop als konfokales Autofokusmikroskop ausgebildet ist. Das konfokale Autofokusmikroskop weist eine Fokussteuerung auf, einen Fokusdetektor, eine Fokussiereinrichtung und eine Lichtquelle zur Erzeugung eines Fokusstrahls.

Bei der erfindungsgemäßen Vorrichtung dient das Interferometer als Lichtquelle zur Erzeugung des Fokusstrahls, das heißt der Messstrahl des Interferometers dient außerdem als Fokusstrahl zur Fokussierung des konfokalen Autofokusmikroskops.

Der von dem Interferometer erzeugte Fokusstrahl wird über das Objektiv des konfokalen Autofokusmikroskops auf das Objekt, das heißt auf den zu vermessenden Messpunkt des Objekts abgebildet und von dem Objekt reflektiert bzw. gestreut. Der reflektierte bzw. gestreute Messstrahl wird wiederum über den Strahlengang des konfokalen Autofokusmikroskops auf den Fokusdetektor abgebildet.

Der Fokusdetektor gibt direkt oder über Signalauswerteeinheiten Messsignale an die Fokussteuerung weiter, welche wiederum mit der Fokussiereinrichtung zusammenwirkend ausgestaltet ist. Abhängig von den Messsignalen des Fokusdetektors regelt die Fokussteuerung die Fokussiereinrichtung derart, dass der Messpunkt des Objekts in den Fokus des Objektivs zu liegen kommt. Die Fokussiereinrichtung kann derart ausgestaltet sein, dass sie eine Verschiebung des Objektivs im Wesentlichen senkrecht zu dem Messstrahl des Interferometers ausführen kann und/oder sie kann derart ausgeführt sein, dass sie das Objekt relativ zum Mikroskop im Wesentlichen senkrecht zum Messstrahl des Interferometers bewegen kann.

Weiterhin weist das Mikroskop der erfindungsgemäßen Vorrichtung einen Raumfilter auf, welcher derart im Strahlengang des konfokalen Autofokusmikroskops angeordnet ist, dass er nicht-fokale Strahlen im wesentlichen ausblendet. Somit werden Strahlen, welche von außerhalb des Fokus des Objektivs in das Objektiv einfallen und in den Strahlengang des Mikroskops eingekoppelt werden, von dem Raumfilter im wesentlichen ausgeblendet, insbesondere werden die nicht-fokalen Strahlen durch den Raumfilter daran gehindert, in den Strahlengang des Interferometers einzufallen. Der Raumfilter ist typischerweise als Blende bzw. Pinhole realisiert.

Die erfindungsgemäße Vorrichtung weist somit den zusätzlichen Vorteil auf, dass Fehler in den Messdaten des Interferometers, die darin begründet sind, dass nicht-fokale Strahlen sich im Interferometer mit fokalen Strahlen überlagern, im wesentlichen ausgeschlossen sind.

Mit der erfindungsgemäßen Vorrichtung ist es somit zum ersten Mal möglich, den Messstrahl eines Interferometers über den Strahlengang eines konfokalen Autofokusmikroskops auf ein Objekt abzubilden und den reflektierten bzw. gestreuten Messstrahl über den Strahlengang des konfokalen Autofokusmikroskops in das Interferometer zurückzuführen, wobei eine Fokussteuerung gewährleistet, dass das Objekt ohne notwendige Handlungen des Benutzers im Fokus zu liegen kommt.

Es ist aus mehreren Gründen vorteilhaft, Messungen nur dann durchzuführen, wenn sich der Messpunkt auf dem Objekt im Fokus des Objektivs befindet:
Zum einen gewährleistet eine Messung mit dem Messpunkt im Fokus des Objektivs einen Messpunkt mit möglichst geringer Ausdehnung und damit eine möglichst hohe Ortsauflösung.

Darüber hinaus können bei einer Messung Messfehler in den Daten des Interferometers auftreten, die darin begründet sind, dass beim Durchgang des Messstrahls durch das Mikroskop Beugungseffekte auftreten:
So ist bekannt, dass die Fokussierung eines monochromatischen Lichtstrahls zu einer Phasenverschiebung führen kann. Dieser sogenannte Guoy-Effekt ist abhängig von der Stärke der Fokussierung, derart, dass eine stärkere Fokussierung eine größere Veränderung in der Phase zur Folge hat.

Wie eingangs erwähnt, wird bei einem Interferometer jedoch gerade die Phasendifferenz des auf die Oberfläche abgebildeten Messstrahls und des von der Objektoberfläche reflektierten Messstrahls zur Bestimmung der Bewegungsgeschwindigkeit der Objektoberfläche benutzt. Eine Veränderung der Phase aufgrund des Guoy-Effektes führt somit zu einer fehlerhaft bestimmten Phasendifferenz und damit zu Fehlern in den Messdaten des Interferometers.

Die Größe des Messfehlers aufgrund des Guoy-Effektes ist jedoch nicht nur von der Stärke der Fokussierung des Messtrahls abhängig, sondern auch davon, wie weit die Oberfläche des Objekts, welche den Messstrahl reflektiert, von dem Fokus des Objektivs entfernt ist. Je größer der Abstand zwischen dem Fokus und der den Messstrahl reflektierenden Oberfläche des Objekts ist, umso stärker ändert sich der Messfehler aufgrund des Guoy-Effektes bei einer Abstandsänderung:
Die Änderung des Messfehlers aufgrund des Guoy-Effektes im Fokus ist 0, d.h. eine geringe Beabstandung der den Messstrahl reflektierenden Oberfläche vom Fokus führt lediglich zu einer so geringen Änderung des Messfehlers, dass sie typischerweise vernachlässigbar ist. Eine Korrektur des Messfehlers aufgrund des Guoy-Effektes ist daher wesentlich genauer möglich, wenn sich der Messpunkt des Objekts im Fokus des Objektivs befindet, denn in diesem Fall führen Änderungen im Abstand zwischen Messpunkt des Objekts und Fokus, welche durch die Bewegung des Objekts oder durch Ungenauigkeiten, Vibrationen oder Stöße der Messapparatur hervorgerufen werden können, wie erwähnt nur zu geringen Änderungen des Messfehlers aufgrund des Guoy-Effektes. Ist der Messfehler aufgrund des Guoy-Effektes bekannt, so kann er somit mit hoher Genauigkeit korrigiert werden, sofern sich der Messpunkt des Objekts im Fokus befindet.

Wenn sich hingegen der Messpunkt des Objekts nicht im Fokus befindet, so führen kleine Änderungen im Abstand des Messpunktes des Objekts zum Fokus des Objektivs zu deutlich größeren Änderungen in dem Messfehler aufgrund des Guoy-Effektes. Selbst wenn der Messfehler aufgrund des Guoy-Effektes auch außerhalb des Fokus bekannt ist, kann er somit nur ungenau korrigiert werden, da eine Ungenauigkeit in der Bestimmung des Abstandes von dem Messpunkt auf dem Objekt zu dem Fokus des Objektivs zu einer vergleichsweisen großen Ungenauigkeit in der Bestimmung des Messfehlers aufgrund des Guoy-Effektes führt.

Für praktische Anwendungen bedeutet dies, dass Messfehler in den Messdaten des Interferometers, welche im Guoy-Effekt begründet sind, nur dann realistischerweise korrigiert werden können, wenn sich das Objekt im Fokus befindet.

In einer vorzugsweisen Ausführungsform umfasst die Vorrichtung daher eine Korrektureinheit, welche mit dem Interferometer verbunden ist. Die Korrektureinheit dient zur Korrektur der Messfehler in den Messdaten des Interferometers, insbesondere von Fehlern, die in dem oben beschriebenen Guoy-Effekt begründet sind.

Der Fehler in den Messdaten des Interferometers aufgrund des Guoy-Effektes hängt - sofern sich der Messpunkt des Objektes im Fokus des Objektivs befindet - im Wesentlichen von der Stärke der Fokussierung des Messstrahls ab.

Eine Korrektur des Messfehlers aufgrund des Guoy-Effektes kann somit in der folgenden Weise durchgeführt werden:
Zunächst wird mit einem Objektiv mit geringer numerischer Apertur, das heißt einem Objektiv, welches den Messstrahl nur schwach fokussiert verglichen mit einem Objektiv mit hoher numerischer Apertur, ein Kalibrierungsobjekt, wie beispielsweise ein Piezo-Schwinger vermessen. Der Piezo-Schwinger führt durch elektrische äußere Anregung Schwingungen aus, welche von der erfindungsgemäßen Vorrichtung mittels des Interferometers vermessen werden. Aufgrund der geringen numerischen Apertur des Objektivs ist auch der Messfehler aufgrund des Guoy-Effektes vernachlässigbar. Die Messdaten des Interferometers sind somit nur äußerst geringfügig mit einem Messfehler aufgrund des Guoy-Effektes behaftet.

Anschließend wird die Messung erneut ausgeführt, wobei bei dieser Messung ein Objektiv mit hoher numerischer Apertur verwendet wird, bei dem der Messfehler aufgrund des Guoy-Effektes nicht vernachlässigbar ist. Durch Vergleich der beiden Messungen kann eine Kalibrierung für das Objektiv mit hoher numerischer Apertur ermittelt werden.

Vorzugsweise enthält die Korrektureinheit der erfindungsgemäßen Vorrichtung daher Kalibrierungsdaten, welche von der Korrektureinheit zum Korrigieren des Messfehlers in den Daten des Interferometers aufgrund des Guoy-Effektes benutzt werden.

Mikroskope verfügen im allgemeinen über mehrere Objektive, mit unterschiedlichen numerischen Aperturen, so dass mit einem Mikroskop unterschiedliche Vergrößerungen bzw. Fokussierungen von durch die Mikroskope abgebildeten Messstrahlen möglich sind.

In einer weiteren Vorzugsweisen Ausführungsform umfasst die erfindungsgemäße Vorrichtung daher mindestens zwei Objektive mit unterschiedlicher numerischer Apertur, welche derart an dem Mikroskop angeordnet sind, dass wahlweise eines der beiden Objektive in den Strahlengang des Mikroskops eingebracht werden kann. Typischerweise werden hierzu die Objektive auf einem Drehteller angeordnet, so dass durch Drehen des Drehtellers das gewünschte Objektiv in den Strahlengang des Mikroskops geschwenkt werden kann.

Da der Messfehler in den Daten des Interferometers aufgrund des Guoy-Effektes im Wesentlichen von der Stärke der Fokusierung und damit im Wesentlichen von dem verwendeten Objektiv abhängt, sofern sich der Messpunkt des Objekts im Fokus des Objektivs befindet, kann nach der oben beschriebenen Methode für unterschiedliche Objektive mit unterschiedlichen numerischen Aperturen jeweils ein Kalibrierungs-Datensatz erstellt werden.

Die vorzugsweise Ausführungsform der Erfindung umfasst daher zweckmäßigerweise eine Kalibrierungs-Datenbank, in der die Kalibrierungs-Datensätze für die Objektive der Vorrichtung gespeichert sind. Die Korrektureinheit ist zweckmäßigerweise derart ausgeführt, dass entsprechend dem verwendeten Objektiv der korrespondierende Kalibrierungs-Datensatz aus der Kalibrierungs-Datenbank ausgewählt werden kann, so dass die Korrektureinheit mit diesen Kalibrierungsdaten die Messfehler in den Messdaten des Interferometers korrigiert.

Die Auswahl der Kalibrierungsdaten aus der Kalibrierungs-Datenbank kann beispielsweise dadurch erfolgen, dass der Benutzer Kenndaten des verwendeten Objektivs, wie beispielsweise die Brennweite oder eine Kennziffer des Objektivs in die Korrektureinheit eingibt, worauf die Korrektureinheit den entsprechenden Kalibrierungs-Datensatz auswählt.

Ebenso sind jedoch auch automatische Verfahren denkbar, beispielsweise in dem eine Erkennungseinheit an dem Mikroskop angeordnet ist, welche das verwendete Objektiv erkennt und ein entsprechendes Signal an die Korrektureinheit abgibt, welche abhängig von diesem Signal den dem verwendeten Objektiv zugeordneten Kalibrierungs-Datensatz auswählt und mit diesem die Korrektur des Messfehlers in den Messdaten des Interferometers durchführt.

In einer weiteren vorzugsweisen Ausführungsform weist das konfokale Autofokusmikroskop der erfindungsgemäßen Vorrichtung eine Auswerteeinheit auf, welche mit der Fokussteuerung verbunden ist. Die Auswerteeinheit wertet die Steuersignale der Fokussteuerung aus und/oder speichert die ausgewerteten oder nicht ausgewerteten Steuersignale.

Die Fokussteuerung regelt die Fokussiereinrichtung abhängig von den Signalen des Fokusdetektors derart, dass der Messpunkt des Messobjekts in dem Fokus des Objektivs zu liegen kommt. Somit sind die Steuersignale der Fokussteuerung ein Maß für den Abstand zwischen dem Fokus des Objektivs und dem Messpunkt des Objekts vor der automatischen Fokussierung. Insbesondere bei einem scannenden Messverfahren, bei dem mehrere ortsverschiedene Messpunkte des Objekts vermessen werden, kann somit ein Höhenprofil des Objekts erstellt werden:
Die Steuersignale der Fokussteuerung, welche notwendig sind, um nach dem Fokussieren eines Messpunktes einen zweiten Messpunkt in den Fokus zu bringen, sind ein Maß für die Höhendifferenz der beiden Messpunkte. Durch ein Abscannen des Objekts mittels vieler nebeneinanderliegender Messpunkte kann so der relative Höhenunterschied der Messpunkte zueinander berechnet werden.

In einer weiteren vorzugsweisen Ausführungsform ist das konfokale Autofokusmikroskop der erfindungsgemäßen Vorrichtung daher als scannendes konfokales Autofokusmikroskop ausgeführt. Das Mikroskop umfasst mindestens ein optisches Verschiebeelement, welches im Strahlengang des konfokalen Autofokusmikroskops angeordnet ist. Durch das optische Verschiebeelement kann der Messstrahl verschoben und/oder verkippt werden, so dass der Messstrahl wahlweise auf mehrere ortsverschiedene Messpunkte des Objekts abgebildet werden kann.

Weiterhin kann der Messstrahl auch dadurch wahlweise auf mehrere ortsverschiedene Messpunkte auf dem Objekt gerichtet werden, dass das Objekt mittels einer Objektverschiebevorrichtung relativ zu dem Mikroskop bewegt wird. Je nach gewünschter Anordnung der Messpunkte kann eine lineare Verschiebung in einer der drei Raumrichtungen, vorzugsweise jedoch senkrecht zu dem Messstrahl des Interferometers erfolgen, ebenso ist jedoch auch eine Drehung des Objekts denkbar.

Darüber hinaus kann es auch zweckmäßig sein, das optische Verschiebeelement und die Objektverschiebevorrichtung beide in einer erfindungsgemäßen Vorrichtung vorzusehen.

Das scannende konfokale Autofokusmikroskop der erfindungsgemäßen Ausführungsform umfasst weiterhin eine Scanner-Steuereinheit, welche mit dem optischen Verschiebeelement und/oder der Objektverschiebevorrichtung zusammenwirkt. Hierbei regelt die Scanner-Steuereinheit die genannten Komponenten derart, dass der Messstrahl wahlweise auf mindestens zwei ortsverschiedene Messpunkte des Objekts abgebildet wird. Zweckmäßigerweise sind die zu vermessenden Messpunkte vor Messbeginn festgelegt, insbesondere in einer Messpunkt-Datenbank der Scanner-Steuereinheit gespeichert.

Für diese Ausführungsform, bei der konfokale Autofokusmikroskop als scannendes konfokales Autofokusmikroskop ausgeführt ist, ist es zweckmäßig, wenn die Auswerteeinheit außerdem mit dem Interferometer und mit der Scanner-Steuereinheit verbunden ist und eine Speichereinheit umfasst, so dass Daten der Fokussteuerung, Daten der Scanner-Steuereinheit und Daten des Interferometers abgespeichert werden können. Die Daten der Fokussteuerung können aus den ausgewerteten oder nicht ausgewerteten Steuersignalen der Fokussteuerung bestehen, die Daten der Scanner-Steuereinheit können aus den ausgewerteten oder nicht ausgewerteten Steuersignalen der Scannereinheit oder aus den Daten der Messpunkt-Datenbank der Scanner-Steuereinheit bestehen. Ebenso können die Daten des Interferometers aus den ausgewerteten oder nicht ausgewerteten Messdaten des Interferometers bestehen.

Die Daten der Fokussteuerung enthalten somit Informationen über die Höhe des Messpunktes, d.h. die z-Raumkoordinate, wohingegen die Daten der Scanner-Steuereinheit Information über die Lage des Messpunktes in einer Raumebene, welche im Wesentlichen parallel zur Objektebene des Mikroskops ist, d.h. die (x,y)-Raumkoordinate enthalten.

Wesentlich ist, dass die Speichereinheit die Daten der Fokussteuerung, die Daten der Scanner-Steuereinheit und die Daten des Interferometers für jeden Messpunkt des Objekts einander zuordnet.

Somit ist für jeden Messpunkt ein Datensatz vorhanden, welcher Daten über die Bewegung des Objekts an der Stelle des Messpunktes und über die (x,y,z)-Raumkoordinate des Messpunktes enthält.

Hierbei ist es zweckmäßig, dass die Auswerteeinheit über die Korrektureinheit mit dem Interferometer verbunden ist, so dass die abgespeicherten Daten des Interferometers bereits korrigiert sind, das heißt den Messfehler aufgrund des Guoy-Effektes nicht mehr aufweisen.

Vorzugsweise ist das Interferometer als Laser-Doppler-Vibrometer ausgeführt.

Da in der erfindungsgemäßen Vorrichtung das Mikroskop als konfokales Mikroskop ausgeführt ist, werden nicht-konfokale Strahlen, das heißt Strahlen, welche von außerhalb des Fokuses des Objektivs in den Strahlengang des Mikroskops gelangen, im wesentlichen mittels eines Raumfilters ausgeblendet. Dies bedeutet, dass die Intensität des durch das Objekt reflektierten Messstrahls nach Durchgang durch den Raumfilter maximal ist, wenn sich der Messpunkt des Objekts im Fokus befindet. Gerät der Messpunkt des Objekts außerhalb des Fokus des Objektivs, so wird der vom Objekt reflektierte Messstrahl durch den Raumfilter ausgeblendet und zwar umso stärker, je mehr der Messpunkt aus dem Fokus des Objektivs gerät. Bewegt man ein Objekt durch den Fokus des Objektivs, so erhält man folglich eine Intensitätsverteilung des reflektierten Messstrahls, welche an der Stelle ein Maximum besitzt, an der sich der Messpunkt des Objekts im Fokus des Objektivs befindet. Somit kann dieses Maximum in der Intensität des reflektierten Messstrahls zur Bestimmung der Fokusposition des Messpunktes des Objekts verwendet werden.

Der Fokusdetektor ist vorzugsweise als Fotodetektor ausgeführt. Besonders zweckmäßig ist es hierbei, wenn die Vorrichtung einen Messstrahl-Strahlteiler umfassst, wobei dieser Strahlteiler derart im Strahlengang der Vorrichtung angeordnet ist, dass ein mittels des Messstrahl-Strahlteilers ausgekoppelter Anteil des Messstrahls auf den Fokusdetektor auftrifft.

Der Messstrahl-Strahlteiler kann zwischen dem blendartigen optischen Element und dem Interferometer im Strahlengang der Vorrichtung angeordnet sein, so dass der nicht durch den Messstrahl-Strahlteiler ausgekoppelte Anteil des Messstrahls in das Interferometer eingekoppelt wird.

Typischerweise umfasst das Interferometer einen Bewegungs-Intensitätsdetektor, welcher derart im Strahlengang des Interferometers angeordnet ist, dass im Interferometer überlagerte Strahlen auf den Bewegungs-Intensitäts-Detektor abgebildet werden. Besonders zweckmäßig ist es in diesem Fall, wenn der Bewegungs-Intensitäts-Detektor außerdem als Fokusdetektor benutzt wird. In diesem Fall ist der vorhergehend erwähnte Strahlteiler nicht notwendig.

Der Bewegungs-Intensitätsdetektor dient somit zum einen zur Bestimmung der Phasendifferenz der im Interferometer überlagerten Strahlen, zur Ermittlung der Bewegung des Messpunktes des Objekts, zum anderen wird mittels des Bewegungs-Intensitätsdetektors aber auch die automatische Fokussierung durchgeführt.

In einer weiteren vorzugsweisen Ausführungsform ist mindestens ein optisches Verschiebeelement als Scanspiegel, insbesondere als Piezo-Scanspiegel ausgeführt.

Ebenso ist es jedoch auch möglich, anstelle des Messstrahls das Objekt relativ zum Mikroskop zu bewegen, insbesondere in der Objektebene des Mikroskops zu verschieben und/oder das Objekt um eine beliebige Raumachse zu drehen, so dass der relativ zum Mikroskop ortsfeste Messstrahl auf ortsverschiedene Messpunkte des Objekts auftrifft.

Dies kann durch eine entsprechend ausgeführte Objekthalterung erreicht werden, welche vorzugsweise als elektrisch angetriebener XY-Tisch ausgeführt ist.

Die im vorangehenden beschriebenen Ausführungsformen erlauben somit die Bestimmung der Bewegung von Messpunkten des Objekts entlang der optischen Achse des Messstrahls des Interferometers, sowie die Bestimmung eines Höhenprofils der Messpunkte des Objekts. Darüber hinaus kann aufgrund der bekannten Steuersignale für das optische Verschiebeelement bzw. die Objektverschiebeeinrichtung die Position des Messpunktes in der Ebene senkrecht zu dem Messstrahl des Vibrometers bestimmt werden. Es kann somit für einen Messpunkt eine (X, Y, Z)-Raumkoordinate der mittels des Interferometer gemessenen Bewegung des Objekts an diesem Messpunkt zugeordnet werden.

Darüber hinaus ist es vorteilhaft, wenn von der erfindungsgemäßen Vorrichtungen auch Bewegungen vermessen werden können, deren Bewegungsrichtung nicht parallel zu der optischen Achse des auf das Objekt auftreffenden Messstrahls ist, insbesondere sogenannte in-plane-Bewegungen, welche im Wesentlichen in der Objektebene des Mikroskops, das heißt in einer Ebene, welche im wesentlichen senkrecht zum Messstrahl des Vibrometers steht, stattfinden.

Hierzu kann ein optischer Aufbau verwendet werden, der auf einen Kameraanschluss eines Mikroskops aufgesetzt wird, und auf der anderen Seite wiederum einen entsprechend ausgebildeten Kameraanschluss aufweist, auf den eine Kamera, typischerweise eine CCD-Kamera aufgesetzt werden kann. Über den Strahlengang des optischen Aufbaus wird ein am Kameraanschluss des Mikroskop vorhandenes Objektbild auf dem zweiten Kameraanschluss abgebildet, so dass das Objektbild von der an den zweiten Kameraanschluss angeschlossenen Kamera aufgenommen werden kann. Gleichzeitig enthält der optische Aufbau einen Strahlteiler zum Einkoppeln von Lichtpulsen einer Stroboskoplampe. Die Stroboskoplampe sendet Lichtpulse in einer Pulsfrequenz aus, welche einer Anregungsfrequenz entsprechen, mit der das zu vermessende Objekt gleichzeitig zu periodischen Bewegungen angeregt wird. Dies ermöglicht über die Auswertung mehrerer zeitversetzter Kamerabilder die Ermittlung der in-plane-Bewegungen des Objekts.

Es ist somit besonders vorteilhaft, diesen optischen Aufbau zur Vermessung von in-plane-Bewegungen mit der erfindungsgemäßen Vorrichtung zu kombinieren. Hierfür weist die erfindungsgemäße Vorrichtung zweckmäßigerweise einen Auskoppel-Strahlteiler auf, welcher im Strahlengang des konfokalen Autofokusmikroskops angeordnet ist, so dass ein Anteil der Strahlen aus dem Strahlengang des konfokalen Autofokusmikroskops ausgekoppelt werden kann. Da in diesem Fall jedoch eine flächige Abbildung des Objekts durch die Kamera, bzw. eine flächige Beleuchtung des Objekts durch die Stroboskoplampe notwendig ist, muss der Strahlteiler im Strahlengang zwischen dem zu vermessenden Objekt und dem Raumfilter angeordnet sein.

Zweckmäßigerweise weist also die erfindungsgemäße Vorrichtung einen Anschluss für weitere optische Komponenten, vorzugsweise einen C-Mount-Anschluss auf, der derart an der erfindungsgemäßen Vorrichtung angeordnet ist, dass die durch den Auskoppel-Strahlteiler ausgekoppelten Strahlen durch diesen Anschluss aus der Vorrichtung austreten können. Zwischen Auskoppel-Strahlteiler und Anschluss ist im Strahlengang der durch den Auskoppel-Strahlteiler ausgekoppelten Strahlen ein optisches Abbildungssystem angeordnet, welches aus mindestens einem optischen Element, insbesondere einer Linse besteht, wobei das Abbildungssystem derart ausgeführt ist, dass das Objektbild des Mikroskops in den Bereich des Anschlusses abgebildet wird. Das optische Abbildungssystem ist demnach vergleichbar mit vorbekannten optischen Abbildungssystemen in optischen Mikroskopen, welche einen Kameranschluss aufweisen. Dort wird typischerweise ebenfalls das Objektbild des Mikroskops mittels eines Abbildungssystems in den Bereich des Kameranschlusses abgebildet, so dass das abgebildete Objektbild beispielsweise mittels einer aufgesetzten Kamera aufgenommen werden kann.

Auf den Anschluss kann dann der beschriebene optische Aufbau zur Vermessung von in-plane-Bewegungen mit der Kamera aufgesetzt werden.

Ebenso ist es jedoch auch möglich, die Kamera und/oder die Stroboskoplampe in die Vorrichtung zu integrieren.

Ein Ausführungsbeispiel der Erfindung wird im Folgenden anhand der beigefügten einzigen Zeichnung näher beschrieben und erläutert.

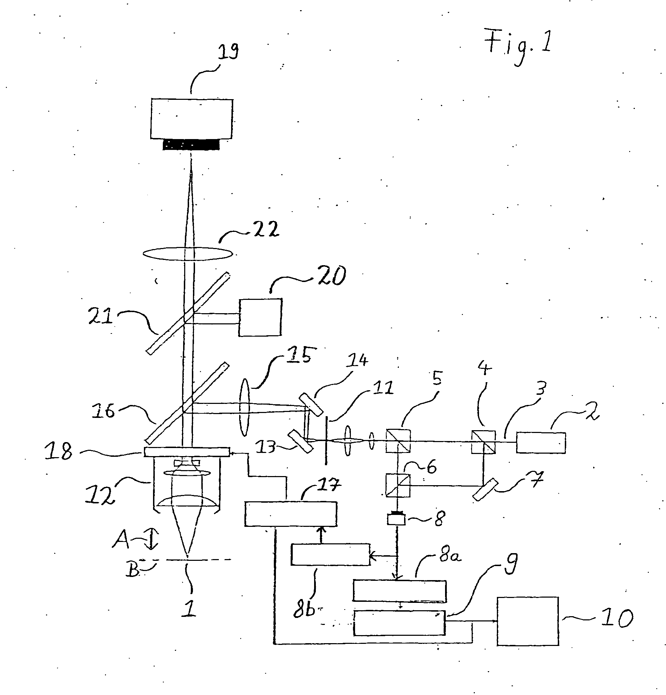

Figur 1 zeigt den schematischen Aufbau einer erfindungsgemäßen Vorrichtung zum Vermessen eines Objektes 1. Die Vorrichtung umfasst ein Interferometer, welches als Laser-Doppler-Vibrometer ausgeführt ist: Ein Laser 2 erzeugt einen Messstrahl 3, welcher über den Strahlengang der Vorrichtung auf das Objekt 1 abgebildet wird, wobei der von dem Objekt 1 reflektierte oder gestreute Messstrahl wiederum über den Strahlengang der Vorrichtung in das Interferometer eingekoppelt wird. Dort werden die beiden Strahlen in an sich bekannter Weise nach Art eines Mach-Zehnder-Interferometers mittels dreier Strahlteiler 4, 5 und 6 und einem Spiegel 7 auf einem Fotodetektor 8 überlagert.

Das Ausgangssignal des Fotodetektors 8 wird an einen Demodulator 8a weitergegeben. Der Demodulator 8a ermittelt in an sich bekannter Weise aus dem Ausgangssignal des Fotodetektors 8 die Phasenverschiebung der im Interferometer überlagerten Strahlen bzw. deren zeitlichen Verlauf und leitet diese an die Korrektureinheit 9 weiter.

Die Korrektureinheit 9 ist derart ausgeführt, dass sie Messfehler in den Signalen des Demodulators 8a, welche in dem vorhergehend beschriebenen Guoy-Effektes begründet sind, korrigiert.

Hierzu weist die Korrektureinheit 9 eine (nicht dargestellte) Speichereinheit auf, in welcher Kalibrierungsdaten für das Objektiv 12 des Mikroskops gespeichert sind. Die Kalibrierungsdaten wurden in der vorhergehend beschriebenen Weise ermittelt. Die Korrektureinheit 9 führt nun mittels der Kalibrierungsdaten für jeden Messpunkt eine Korrektur der mittels des Interferometers gemessenen Bewegung des Objekts 1 am vermessenen Messpunkt durch und gibt die korrigierten Daten an die Auswerteeinheit 10 weiter.

Die Auswerteeinheit 10 errechnet aus den Ausgangsdaten der Korrektureinheit in an sich bekannter Weise die Bewegung des Objekts 1 am vermessenen Messpunkt. Die Auswerteeinheit 10 verfügt über eine (nicht dargestellte) Speichereinheit, zum Abspeichern der ausgewerteten Daten und/oder der Ausgangsdaten der Korrektureinheit.

Der Messstrahl 3 wird über ein konfokales Autofokus-Mikroskop auf den zu vermessenden Messpunkt des Objekts 1 abgebildet. Das Mikroskop umfasst eine Blende 11, welche nicht-fokale Strahlen, die von außerhalb des Fokus des Objektivs 12 des Mikroskops in den Strahlengang des Mikroskops eingekoppelt werden im Wesentlichen ausblendet, so dass diese Strahlen nicht in den Strahlengang des Interferometers eingekoppelt werden.

Nicht-fokale Strahlen sind insbesondere Messstrahlen, welche von einem Messpunkt des Objekts, der sich nicht im Fokus des Objektivs 12 befindet, durch Reflektion bzw. Streuung wiederum in den Strahlengang des Mikroskops eingekoppelt werden.

Der Messstrahl 3 wird im Strahlengang des Mikroskops über zwei Scanspiegel 13, 14, eine Linse 15 und einen Auskoppel-Strahlteiler 16, sowie über das Objektiv 12 auf das Messobjekt 1 abgebildet. Über die Scanspiegel 13 und 14 kann der Messstrahl 3 in jeweils einer Raumrichtung verkippt werden, wobei die beiden Raumrichtungen derart zueinander stehen, dass durch eine Kombination der beiden Kippbewegungen eine Verkippung des Messstrahls 3 in einer beliebigen Raumrichtung möglich ist. Dies kann beispielsweise dadurch erreicht werden, dass die Schwenkachsen der beiden Scanspiegel 13, 14 senkrecht zueinander stehen.

Durch das Verkippen des Messstrahls 3 mittels der Scanspiegel 13 und 14 kann der Messstrahl 3 somit auf ortsverschiedene Messpunkte auf dem Objekt 1 gerichtet werden.

In der in Figur 1 dargestellten Ausführungsform dient der Fotodetektor 8 nicht nur der Messung der Phasenverschiebung der am Fotodetektor 8 überlagerten Strahlen, er wird ebenso als Fokusdetektor für die Autofokusfunktion benutzt:
Wie vorhergehend bereits beschrieben, wird bei der erfindungsgemäßen Vorrichtung der Messstrahl 3 des Interferometers ebenso als Fokusstrahl für die Autofokusfunktion des Mikroskops verwendet. Bei einem konfokalen Autofokusmikroskop weist der Fokusstrahl ein Intensitätsmaximum auf, wenn sich der zu vermessende Messpunkt im Fokus befindet und die Intensität des Fokusstrahls fällt ab, wenn sich der zu vermessende Messpunkt aus dem Fokus des Mikroskopobjektivs bewegt.

Dies trifft auch für den am Messpunkt reflektierten Messstrahl 3 nach Durchgang durch die Blende 11 zu, so dass er ein Intentisitätsmaximum aufweist, wenn sich der Messpunkt des Objekts 1 im Fokus des Objektivs 12 befindet.

Zur Bestimmung der Intensität des am Messpunkt des Objekts 1 reflektierten Messstrahls 3 nach Durchgang durch die Blende 11 umfasst die erfindungsgemäße Ausführungsform daher eine Amplituden-Auswerteeinheit 8b, welche mit dem Photodetektor 8 verbunden ist. Die Amplituden-Auswerteeinheit ist derart ausgeführt, dass sie eine an sich bekannte Ermittlung der Modulationsamplitude des Messsignals des Photodetektors 8, d.h. des Messignals aufgrund der am Photodetektor 8 überlagerten Strahlen durchführt:
Die Amplitude des Messsignals des Photodetektors 8 ist durch mehrere Faktoren bestimmt. Wesentlich ist hierbei die Überlagerung des von dem Laser 2 ausgesandten und über die Strahlteiler 4 und 6, sowie den Spiegel 7 auf den Photodetektor abgebildeten Referenzstrahls mit dem vom Objekt 1 reflektierten und über den Strahlengang des Mikroskops nach Durchgang durch Blende 11 über die Strahlteiler 5 und 6 auf den Photodetektor 8 abgebildeten reflektierten Messstrahl.

Die Signalstärke am Photodetektor hängt wesentlich von der Phasenverschiebung dieser beiden Strahlen ab, d.h. von deren Interferenz. Ändert sich die Phasenverschiebung, so ändert sich auch die Signalstärke am Photodetektor und erreicht eine maximale Amplitude, wenn konstruktive Interferenz vorliegt und eine minimale Amplitude, wenn destruktive Interferenz vorliegt. Somit eignet sich die Amplitude an sich nicht als Maß für die Intensität des reflektierten Messstrahls 3 nach Durchgang durch Blende 11.

Die Differenz der minimalen und der maximalen Amplitude ist jedoch aufgrund der konfokalen Eigenschaft der erfindungsgemäßen Vorrichtung wie oben beschrieben von dem Abstand des den Messstrahl 3 reflektierenden Messpunktes des Objektes 1 zu dem Fokus des Objektivs 12 abhängig: Die Differenz ist maximal, wenn sich der Messpunkt im Fokus befindet und nimmt ab, wenn sich der Messpunkt aus dem Fokus entfernt. Somit kann durch Bestimmung der Differenz der minimalen und maximalen Amplitude der Signalstärke am Photodetektor 8 ein Maß für die Intensität des reflektierten Messstrahls 3 nach Durchgang durch Blende 11 ermittelt werden.

Zur Bestimmung der Differenz von minimaler und maximaler Amplitude muss somit die Phase zwischen Referenzstrahl und reflektiertem Messstrahl verschoben werden und zwar mindestens um eine Periode des Messstrahls. Diese Phasenverschiebung kann auf unterschiedliche Weise stattfinden:
So kann z.B. die Weglänge zwischen Laser 2 und Objekt 1 um bis zu eine Wellenlänge des Messstrahls 3 relativ zur Weglänge des Referenzstrahls zwischen Laser 2 und Photodetektor 1 verändert werden. Dies ist z.B. durch ein Verschieben des Objektes entlang der Achse A möglich. Dadurch ändert sich das Verhältnis der Weglängen von reflektiertem Messstrahl 3 und Referenzstrahl, was einer Phasenänderung entspricht, d.h. das Verschieben des Objektes 1 entlang der Achse A um eine Wellenlänge moduliert das Signal des Photodetektors 8.

Weiterhin kann das Vibrometer als an sich bekanntes heterodyn-Interferometer ausgeführt sein, bei dem zwei optische Wellen mit leicht unterschiedlicher Frequenz überlagert werden. Dies kann Beispielsweise dadurch erreicht werden, dass zwischen Spiegel 7 und Strahlteiler 6 ein optisches Bauteil in den Strahlengang integriert wird, welches die Frequenz einer Lichtwelle verschieben kann, wie beispielsweise ein akusto-optischer Modulator.

In diesem Fall entsteht am Photodetektor 8 ein Signal mit der Differenzfrequenz der beiden Wellen (der sogenannten Hererodyn-Frequenz), d.h. das Signal des Photodetektors 8 weist eine Modulation auf, ohne dass das Objekt 1 verschoben werden muss. Auch die Amplitudendifferenz dieser Modulation ist maximal, wenn sich der Messpunkt des Objektes im Fokus des Objektivs 12 befindet und nimmt ab, wenn der Messpunkt aus dem Fokus gerät.

In beiden Varianten führt eine die Bestimmung der Modulationsamplitude des Signals des Photodetektors 8 durch die Amplituden-Auswerteeinheit 8b, somit zu einem Ergebnis, welches ein Maß für die Intensität des am Messpunkt des Objekts 1 reflektierten Messstrahls 3 nach Durchgang durch die Blende 11 darstellt.

Die Modulationsamplitude wird von der Amplituden-Auswerteeinheit 8b an die Fokussteuerung 17 weitergeleitet.

Die Fokussteuerung 17 ist mit einer Fokussiereinrichtung 18 verbunden. Die Fokussiereinrichtung 18 ist in diesem Ausführungsbeispiel als elektronisch steuerbarer Positionierschlitten ausgeführt, welcher über Piezo-Elemente ein Verfahren des Objektivs 12 entlang der Achse A des auf das Objekt auftreffenden Messstrahls 3 ermöglicht.

Die Fokussteuerung 17 regelt die Fokussiereinrichtung 18 derart, dass das von der Amplituden-Auswerteeinheit 8b abgegebene Signal maximal wird. Dadurch ist gewährleistet, dass sich der Messpunkt des Objekts 1 im Fokus des Objektivs 12 befindet.

Die Fokussteuerung 17 ist, wie auch die Korrektureinheit 9, mit der Auswerteeinheit 10 verbunden. Die Auswerteeinheit 10 empfängt die Steuersignale der Fokussiereinrichtung 17 und kann so den Verfahrweg des Objektivs 12 durch die Fokussiereinrichtung 18 ermitteln, welcher notwendig ist, damit der Messpunkt des Objekts 1 in dem Fokus des Objektivs 12 zu liegen kommt. Bei einem scannenden Messverfahren, bei dem mehrere ortsverschiedene Punkte auf dem Objekt 1 hintereinander vermessen werden, kann so durch ein Vergleich der Verfahrwege ein Höhenprofil der Messpunkte ermittelt werden.

Bei der in Figur 1 dargestellten Ausführungsform ordnet die Speichereinheit der Auswerteeinheit 10 jedem Messpunkt somit zum einen die relative Höhe gegenüber den übrigen vermessenen Messpunkten zu und zum anderen die mittels des Interferometers bestimmte Bewegung des Messpunkts des Objekts 1.

Die Auswerteeinheit 10 ist darüber hinaus mit einer (nicht dargestellten) Scanner-Steuereinheit der Scanspiegel 13 und 14 verbunden. Die Scanner-Steuereinheit regelt die Kippstellung der beiden Scanspiegel 13 und 14 derart, dass für jeden einzelnen Messvorgang der Messstrahl 3 auf den jeweils vorgewählten Messpunkt auf dem Objekt 1 auftrifft. Die Scanner-Steuereinheit gibt die dazu notwendigen Steuersignale an die Auswerteeinheit 10 weiter. Die Auswerteeinheit 10 kann somit auch die relative Position der Messpunkte in der Messebene B zueinander, das heißt in der Ebene senkrecht zur Achse A des Messstrahls 3 ermitteln.

Dadurch können in der Speichereinheit zu dem Messpunkt eine (x, y, z)-Raumkoordinate des Messpunkts und die mittels des Interferometers bestimmte Bewegung des Messpunkts einander zugeordnet abgespeichert werden.

Damit auch Bewegungen mit dem in Figur 1 dargestellten Ausführungsbeispiel ermittelt werden können, welche nicht entlang der Achse A des Messstrahls 3 stattfinden, insbesondere in-plane-Bewegungen, welche in der Objektebene B des Mikroskops stattfinden, umfasst das Ausführungsbeispiel zusätzlich eine CCD-Kamera 19, eine Stroboskoplampe 20 und einen Stroboskop-Strahlteiler 21, zum Einkoppeln der Lichtpulse der Stroboskoplampe 20 in den Strahlengang des Mikroskops. Die Lichtpulse der Stroboskoplampe 20 werden somit von dem Stroboskop-Strahlteiler 21 über den Auskoppel-Strahlteiler 16 und das Objektiv 12 auf das Objekt 1 abgebildet.

Die von dem Objekt 1 reflektierten bzw. gestreuten Lichtpulse der Stroboskoplampe 20 werden über das Objektiv 12, den Auskoppel-Strahlteiler 16, den Stroboskop-Strahlteiler 21 und eine weitere Linse 22 auf die CCD-Kamera 19 abgebildet.

Da sich die Blende 11 nicht im Strahlengang zwischen Stroboskoplampe 20 und Objekt bzw. zwischen Objekt und CCD-Kamera 19 befindet, ist ein flächiges Ausleuchten mittels der Stroboskoplampe 20 und eine flächige Bildaufnahme mittels der CCD-Kamera 19 möglich. Ein Vergleich der von der CCD-Kamera 19 zeitlich versetzt aufgenommenen Bilder ermöglicht somit nach an sich bekannter Weise ein Ermitteln der in-plane-Schwingungen des Objekts. Hierzu weist die Vorrichtung ferner eine (nicht dargestellte) in-plane-Auswerteeinheit auf, welche mit der Auswerteeinheit 10 verbunden ist.

Somit kann in der Speichereinheit der Auswerteeinheit 10 für jeden Messpunkt nicht nur die (x, y, z)-Raumkoordinate und die Bewegung entlang der Achse A des Messstrahls 3, sondern auch die mittels der in-plane-Auswerteeinheit ermittelte Bewegung in der Objektebene B an diesen Messpunkt abgespeichert werden.

Für den zeitlichen Ablauf einer Messung sind mehrere Varianten möglich. So kann eine Messung beispielsweise durch folgende Schritte erfolgen:
1. Zunächst wird mittels der Scanspiegel 13 und 14 der Messstrahl auf einen zu vermessenden Messpunkt des Objekts 1 gerichtet wird und die entsprechende Ortsinformation (x,y-Koordinaten) an die Auswerteeinheit 10 weitergegeben.
2. Mittels der Fokussteuerung 17 und der Fokussiereinrichtung 18 wird das Objektiv 12 derart verfahren, dass der Messpunkt des Objekts 1 im Fokus des Objektivs 12 liegt und das entsprechende Steuersignal an die Auswerteeinheit 10 weitergeleitet wird, zur Ermittlung der Höheninforma tion (z-Koordinate). Hierbei wertet die Amplituden-Auswerteeinheit 8b jeweils nach Verfahren des Objekts um eine Wellenlänge des Messstrahls 3 die Modulationsamplitude des Signals des Photodetektors 8 aus und die Fokussteuerung 17 regelt die Fokussiereinrichtung 18 derart, dass die Modulationsamplitude maximal wird.
3. Mittels des Interferometers wird die Bewegung des Messpunktes des Objekts 1 entlang der optischen Achse des Messstrahls des Interferometers bestimmt, wobei die Korrektureinheit 9 Messfehler in den Messdaten des Fotodetektors 8, welche in dem Guoy-Effekt begründet sind korrigiert und die korrigierten Messdaten an die Auswerteeinheit 10 weiterleitet, zur Bestimmung der Bewegung des Objektes 1 am Messpunkt.
4. Die Speichereinheit speichert für diesen Messpunkt einen Datensatz mit den (x, y, z)-Raumkoordinaten und den Bewegungsdaten dieses Messpunktes ab.

Dieser Messvorgang wird für jeden vorgesehenen Messpunkt wiederholt.

Anschließend kann mittels der Stroboskoplampe 20 und der CCD-Kamera 19 eine in-plane-Messung erfolgen, wobei die Daten der ermittelten in-plane-Messung von der Auswerteeinheit 10 mit den abgespeicherten Messdaten überlagert werden, derart, dass für den Messpunkt neben der bereits bekannten Information zusätzlich die Bewegung in der Objektebene B des Mikroskops abgespeichert wird.

Typischerweise wird das Objekt 1 für solche Messungen von einer (nicht dargestellten) externen Anregeeinheit zu periodischen Schwingungen angeregt.

## Patentansprüche

1. Vorrichtung zum optischen Vermessen eines Objektes (1), insbesondere zur Bewegungsmessung, umfassend
ein Interferometer zur Messung von Bewegungen entlang der Achse (A) des Messstrahls (3) des Interferometers und
ein Mikroskop mit einem Objektiv (12) und einer Fokussiereinrichtung (18), wobei die Fokussiereinrichtung (18) derart ausgeführt ist, dass sie die relative Lage des Objektes (1) und des Fokus des Objektivs (12) zueinander verändern kann,
wobei das Interferometer und das Mikroskop einander zugeordnet sind, derart, dass der Messstrahl (3) des Interferometers über den Strahlengang des Mikroskops auf das Objekt (1) abgebildet wird,
**dadurch gekennzeichnet,**
**dass** das Mikroskop als konfokales Autofokusmikroskop ausgebildet ist, mit einer Fokussteuerung (17), einem Fokusdetektor (8) und einer Lichtquelle zur Erzeugung eines Fokusstrahls,
sowie mit einem Raumfilter (11), welcher derart im Strahlengang des konfokalen Autofokusmikroskops angeordnet ist, dass er nicht-fokale Strahlen, welche von Punkten außerhalb des Fokus des Objektivs (12) in das Objektiv (12) einfallen, im Wesentlichen ausblendet,
wobei das konfokale Autofokusmikroskop derart ausgeführt ist, dass der von der Lichtquelle erzeugte Fokusstrahl über das Objektiv (12) auf das Objekt (1) und auf den Fokusdetektor (8) abgebildet wird und dass die Fokussteuerung (17) mit der Fokussiereinrichtung (18) und dem Fokusdetektor (8) zusammenwirkend ausgestaltet ist, derart, dass der Fokusdetektor (8) Messsignale an die Fokussteuerung (17) abgibt und die Fokussteuerung (17) die Fokussiereinrichtung (18) abhängig von den Messsignalen derart regelt, dass ein Messpunkt des Objekts (1) in dem Fokus des Objektivs (12) zu liegen kommt,
und wobei das Interferometer die Lichtquelle zur Erzeugung des Fokusstrahls ist.

2. Vorrichtung nach Anspruch 1,
**dadurch gekennzeichnet,**
**dass** die Vorrichtung eine Korrektureinheit (9) umfasst, welche mit dem Interferometer verbunden und derart ausgeführt ist, dass sie Messfehler in den Messdaten des Interferometers, insbesondere einen Messfehler aufgrund des Guoy-Effektes korrigiert.

3. Vorrichtung nach Anspruch 2,
**dadurch gekennzeichnet,**
**dass** die Korrektureinheit (9) Kalibrierungsdaten enthält und derart ausgeführt ist, dass sie die Messfehler in den Messdaten des Interferometers, insbesondere einen Messfehler aufgrund des Guoy-Effektes, mittels der Kalibrierungsdaten korrigiert.

4. Vorrichtung nach Anspruch 3,
**dadurch gekennzeichnet,**
**dass** das Mikroskop mindestens ein zweites Objektiv umfasst,
**dass** das erste und das zweite Objektiv derart an dem Mikroskop angeordnet sind, dass das erste Objektiv wahlweise durch das zweite Objektiv ersetzt werden kann und
**dass** die Korrektureinheit (9) eine Kalibrierungs-Datenbank umfasst, in der mindestens zwei jeweils einem der zwei Objektive zugeordnete Kalibrierungs-Datensätze gespeichert sind,
wobei Korrektureinheit (9) derart ausgeführt ist, dass wahlweise ein Kalibrierungs-Datensatz ausgewählt werden kann und die Korrektureinheit (9) mittels des ausgewählten Kalibrierungs-Datensatzes die Korrektur der Messdaten des Interferometers durchführt.

5. Vorrichtung nach einem der vorangegangenen Ansprüche, **dadurch gekennzeichnet,**
**dass** das konfokale Autofokusmikroskop eine Auswerteeinheit (10) umfasst, welche mit der Fokussteuerung (17) verbunden und derart ausgeführt ist, dass sie die Steuersignale der Fokussteuerung (17) auswertet und/oder speichert, insbesondere dass sie die ausgewerteten Steuersignale der Fokussteuerung (17) speichert.

6. Vorrichtung nach einem der vorangehenden Ansprüche,
**dadurch gekennzeichnet,**
**dass** das konfokale Autofokusmikroskop als scannendes konfokales Autofokusmikroskop ausgeführt ist,
welches eine Scanner-Steuereinheit und ein optisches Verschiebelement (13,14) und/oder eine Objektverschiebevorrichtung umfasst,
wobei die Scanner-Steuereinheit mit dem optischen Verschiebelement (13,14) und/oder der Objektverschiebevorrichtung derart zusammenwirkend ausgestaltet ist, dass die Scanner-Steuereinheit das optische Verschiebeelement (13,14) und/oder die Objektverschiebevorrichtung mittels Steuersignalen regelt, derart, dass der Messstrahl wahlweise auf mindestens zwei ortsverschiedene Messpunkte des Objekts (1) abgebildet wird,
wobei das optische Verschiebeelement (13,14) im Strahlengang des konfokalen Autofokusmikroskops angeordnet und derart ausgeführt ist, dass der Messstrahl (3) abhängig von den Steuersignalen der Scanner-Steuereinheit verschoben und/oder verkippt werden kann, derart, dass der Messstrahl wahlweise auf mindestens zwei ortsverschiedene Messpunkte des Objekts (1) abgebildet wird und
wobei die Objektverschiebevorrichtung derart ausgeführt ist, dass das Objekt (1) abhängig von den Steuersignalen der Scanner-Steuereinheit relativ zum Messstrahl (3) verschoben und/oder gedreht werden kann, derart, dass der Messstrahl (3) wahlweise auf mindestens zwei ortsverschiedene Messpunkte des Objekts (1) abgebildet wird.

7. Vorrichtung nach den Ansprüchen 5 und 6,
**dadurch gekennzeichnet,**
**dass** die Auswerteeinheit (10) mit dem Interferometer und mit der Scanner-Steuereinheit verbunden ist und eine Speichereinheit umfasst, welche derart ausgeführt ist, dass sie
- Daten der Fokussteuerung (17), welche aus den Steuersignalen der Fokussteuerung (17) und/oder den ausgewerteten Steuersignalen der Fokussteuerung (17) bestehen,
- Daten der Scanner-Steuereinheit, welche aus den Steuersignalen der Scanner-Steureinheit und/oder den ausgewerteten Steuersignalen der Scanner-Steuereinheit bestehen und
- Daten des Interferometers, welche aus den Messdaten des Interferometers und/oder aus den ausgewerteten Messdaten des Interferometers bestehen,
abspeichert,
wobei die Speichereinheit die Daten der Fokussteuerung (17), die Daten der Scanner-Steuereinheit und die Daten des Interferometers für jeden Messpunkt des Objekts (1) einander zuordnet.

8. Vorrichtung nach Anspruch 7 und einem der Ansprüche 2 bis 4,
**dadurch gekennzeichnet,**
**dass** die Auswerteeinheit (10) über die Korrektureinheit (9) mit dem Interferometer verbunden ist und dass die Speichereinheit derart ausgeführt ist, dass sie Daten des Interferometers, welche aus den korrigierten Messdaten des Interferometers bestehen, abspeichert.

9. Vorrichtung nach einem der vorangegangenen Ansprüche,
**dadurch gekennzeichnet,**
**dass** das Interferometer ein Laser-Doppler-Vibrometer ist.

10. Vorrichtung nach einem der vorangegangenen Ansprüche,
**dadurch gekennzeichnet,**
**dass** der Fokusdetektor (8) als Photodetektor ausgeführt ist.

11. Vorrichtung nach einem der vorangegangen Ansprüche,
**dadurch gekennzeichnet,**
**dass** die Vorrichtung einen Messstrahl-Strahlteiler umfasst, welcher derart im Strahlengang der Vorrichtung angeordnet ist, dass ein mittels des Messstrahl-Strahlteilers ausgekoppelter Anteil des Messstrahls auf den Fokusdetektor auftrifft.

12. Vorrichtung nach Anspruch 11,
**dadurch gekennzeichnet,**
**dass** der Messstrahl-Strahlteiler zwischen dem Raumfilter (11) und dem Interferometer im Strahlengang der Vorrichtung angeordnet ist.

13. Vorrichtung nach einem der Ansprüche 1 bis 10,
**dadurch gekennzeichnet,**
**dass** das Interferometer einen Bewegungs-Intensitätsdetektor umfasst, welcher derart im Strahlengang des Interferometers angeordnet ist, dass im Interferometer überlagerte Strahlen auf ihn abgebildet werden und
**dass** der Bewegungs-Intensitätsdetektor der Fokusdetektor (8) ist.

14. Vorrichtung nach einem der Ansprüche 6 bis 13,
**dadurch gekennzeichnet,**
**dass** mindestens ein optisches Verschiebeelement als Scanspiegel (13,14) ausgeführt ist, insbesondere als Piezo-Scanspiegel.

15. Vorrichtung nach einem der vorhergehenden Ansprüche,
**dadurch gekennzeichnet,**
**dass** die Fokussiereinrichtung (18) als Positionierschlitten für das Objektiv (12) ausgeführt ist, insbesondere als Piezo-Positionierschlitten,
wobei der Positionierschlitten derart ausgeführt ist, dass das Objektiv (12) entlang der Achse (A) des Messstrahls des Interferometers verfahrbar ist.

16. Vorrichtung nach einem der vorangehenden Ansprüche,
**dadurch gekennzeichnet,**
**dass** das konfokale Autofokusmikroskop einen Auskoppel-Strahlteiler (16) aufweist, welcher im Strahlengang des konfokalen Autofokusmikroskops angeordnet ist, zum Auskoppeln eines Anteils der Strahlen aus dem Strahlengang des konfokalen Autofokusmikroskops und
**dass** der Auskoppel-Strahlteiler (16) im Strahlengang zwischen dem Objekt (1) und dem Raumfilter (11) angeordnet ist.

17. Vorrichtung nach Anspruch 16,
**dadurch gekennzeichnet,**
**dass** die Vorrichtung einen Anschluss für weitere optische Komponenten, insbesondere einen C-Mount Anschluss umfasst, wobei der Anschluss derart angeordnet ist, dass er im Strahlengang der durch den Auskoppel-Strahlteiler (16) ausgekoppelten Strahlen liegt und
**dass** die Vorrichtung ein optisches Abbildungssystem aufweist, welches mindestens ein optisches Element, insbesondere eine Linse umfasst,
wobei das optische Abbildungssystem zwischen Auskoppel-Strahlteiler (16) und Anschluss im Strahlengang der durch den Auskoppel-Strahlteiler (16) ausgekoppelten Strahlen angeordnet und derart ausgeführt ist, dass ein Objektbild des Mikroskops im Bereich des Anschlusses abgebildet wird.

18. Vorrichtung nach einem der Ansprüche 16 oder 17,
**dadurch gekennzeichnet,**
**dass** die Vorrichtung eine Kamera (19), insbesondere eine CCD-Kamera, zum flächigen Abbilden des Messobjekts und/oder eine Beleuchtungseinrichtung zum flächigen Beleuchten des Objekts (1) umfasst, wobei die Kamera (19) und/oder die Beleuchtungseinrichtung im Strahlengang der durch den Auskoppel-Strahlteiler (16) ausgekoppelten Strahlen angeordnet sind.

19. Vorrichtung nach Anspruch 18,
**dadurch gekennzeichnet,**
**dass** die Beleuchtung als Stroboskopbeleuchtung (20,21) ausgeführt ist und
**dass** die Vorrichtung eine In-Plane-Auswerteeinheit umfasst, wobei die In-Plane-Auswerteinheit mit der Kamera (19) verbunden und derart ausgeführt ist, dass sie mehrere zeitversetzt aufgenommene Bilder der Kamera (19) auswertet, derart dass eine Bewegung des Objekts (1) in einer Ebene senkrecht zu dem Messstrahl (3) erfasst werden kann.

20. Verfahren zum optischen Vermessen eines Objekts (1) insbesondere zur Schwingungsmessung, mittels einer Vorrichtung gemäß einem der vorangehenden Ansprüche, folgende Schritte umfassend:
- Abbilden des Messstrahls (3) eines Interferometers auf das Objekt (1) mittels eines konfokalen Autofokusmikroskops;
- Regeln einer Fokussiereinrichtung (18) des Autofokusmikroskops mittels einer Fokussteuerung (17), welche Messsignale von einem Fokusdetektor (8) erhält, derart, dass der Messpunkt des Objekts (1) in den Fokus des Objektivs (12) des konfokalen Autofokusmikroskops zu liegen kommt;
- Messen der Schwingungen des Objekts (1) in Richtung des Messstrahls des Interferometers (3) mittels des Interferometers und einer mit dem Interferometer verbundenen Auswerteeinheit (10).

21. Verfahren nach Anspruch 20,
folgenden zusätzlichen Schritt umfassend:
- Korrektur der Messdaten des Interferometers, insbesondere eines Messfehlers aufgrund des Guoy-Effektes mittels einer Korrektureinheit (9), welche mit dem Interferometer und mit der Auswerteinheit (10) verbunden ist.

22. Verfahren nach Anspruch 21,
**dadurch gekennzeichnet,**
**dass** die Korrektur der Messdaten des Interferometers folgende Schritte umfasst:
- Ermitteln von Kenndaten des Objektivs (12) des Autofokusmikroskops;
- Auswahl eines objektiv-spezifischen Kalibrierungsdatensatzes aus einer Kalibrierungsdatenbank der Korrektureinheit (9), welche für mehrere Objektiv-Kenndaten jeweils einen objektiv-spezifischen Kalibrierungsdatensatz enthält, mittels der Kenndaten des Objektivs (12);
- Korrigieren des aufgrund des Guoy-Effektes in den Messdaten des Interferometers auftretenden Messfehlers mittels der Korrektureinheit (9), wobei die Korrektureinheit (9) die Korrektur auf Grundlage des objektiv-spezifischen Kalibrierungsdatensatzes durchführt.

## Claims

1. Apparatus for the optical measurement of an object (1), in particular for the measurement of movement, comprising
an interferometer for the measurement of movements along the axis (A) of the measurement beam (3) of the interferometer, and
a microscope with an objective (12) and a focusing device (18), wherein the focusing device (18) is designed in such a way that it can change the relative position of the object (1) and the focus of the objective (12) relative to one another,
wherein the interferometer and the microscope are co-ordinated with one another in such a way that the measurement beam (3) of the interferometer is imaged over the beam path of the microscope onto the object (1),
**characterised in that** the microscope is constructed as a confocal autofocus microscope with a focus control (17), a focus detector (8) and a light source for the generation of a focusing beam,
as well as a spatial filter (11) which is disposed in the beam path of the confocal autofocus microscope in such a way that it substantially screens out non-focal beams which are incident on the objective (12) from points outside the focus of the objective (12),
wherein the confocal autofocus microscope is designed in such a way that the focusing beam generated by the light source is imaged via the objective (12) onto the object (1) and onto the focus detector (8), and that the focus control (17) is designed to co-operate with the focusing device (18) and the focus detector (8) in such a way that the focus detector (8) emits measurement signals to the focus control (17) and the focus control (17) adjusts the focusing device (18) as a function of the measurement signals in such a way that a measurement point of the object (1) comes to lie at the focus of the objective (12),
and wherein the interferometer is the light source for generation of the focusing beam.

2. Apparatus as claimed in Claim 1, **characterised in that** the apparatus comprises a correction unit (9, which is connected to the interferometer and is designed in such a way that it corrects measurement errors in the measurement data of the interferometer, in particular a measurement error due to the Guoy effect.

3. Apparatus as claimed in Claim 2, **characterised in that** the correction unit (9) contains calibration data and is designed in such a way that it corrects the measurement errors in the measurement data of the interferometer, in particular a measurement error due to the Guoy effect, by means of the calibration data.

4. Apparatus as claimed in Claim 3, **characterised in that** the microscope comprises at least a second objective, that the first and the second objectives are disposed on the microscope in such a way that the first objective can be selectively replaced by the second objective, and that the correction unit (9) comprises a calibration database in which are stored at least two calibration data sets each assigned to one of the two objectives, wherein the correction unit (9) is designed in such a way that selectively one calibration data set can be selected and the correction unit (9) carries out the correction of the measurement data of the interferometer by means of the selected calibration data set.

5. Apparatus as claimed in any one of the preceding claims, **characterised in that** the confocal autofocus microscope comprises an evaluation unit (10) which is connected to the focus control (17) and is designed in such a way that it evaluates and/or stores the control signals of the focus control (17), in particular in such a way that it stores the evaluated control signals of the focus control (17).

6. Apparatus as claimed in any one of the preceding claims, **characterised in that** the confocal autofocus microscope is designed as a scanning confocal autofocus microscope which comprises a scanner control unit and an optical shift element (13, 14) and/or an object shift device, wherein the scanner controller unit co-operates with the optical shift element (13, 14) and/or the object shift device in such a way that the scanner control unit adjusts the optical shift element (13, 14) and/or the object shift device by means of control signals in such a way that the measurement beam is imaged selectively onto at least two measurement points at different locations on the object (1), wherein the optical shift element (13, 14) is disposed in the beam path of the confocal autofocus microscope and is designed in such a way that the measurement beam (3) can be shifted and/or tilted as a function of the control signals of the scanner control unit in such a way that the measurement beam is imaged selectively onto at least two measurement points at different locations on the object (1), and wherein the object shift device is designed in such a way that the object (1) can be shift and/or rotated relative to the measurement beam (3) as a function of the control signals of the scanner control unit in such a way that the measurement beam (3) is imaged selectively onto at least two measurement points at different locations on the object (1).

7. Apparatus as claimed in Claims 5 and 6, **characterised in that** the evaluation unit (10) is connected to the interferometer and to the scanner control unit and comprises a memory unit, which is designed in such a way that it stores
- data of the focus control (17) which comprise the control signals of the focus control (17) and/or the evaluated control signals of the focus control (17),
- data of the scanner control unit which comprise the control signals of the scanner control unit and/or the evaluated control signals of the scanner control unit, and
- data of the interferometer which comprise the measurement data of the interferometer and/or the evaluated measurement data of the interferometer,
wherein the memory unit assigns the data of the focus control (17), the data of the scanner control unit and the data of the interferometer for each measurement point of the object (1) to one another.

8. Apparatus as claimed in Claim 7 and any one of Claims 2 to 4, **characterised in that** the evaluation unit (10) is connected by way of the correction unit (9) to the interferometer and that the memory unit is designed in such a way that it stores data of the interferometer which comprise the corrected measurement data of the interferometer.

9. Apparatus as claimed in any one of the preceding claims, **characterised in that** the interferometer is a laser Doppler vibrometer.

10. Apparatus as claimed in any of the preceding claims, **characterised in that** the focus detector (8) is designed as a photodetector.

11. Apparatus as claimed in any one of the preceding claims, **characterised in that** the apparatus comprises a measurement beam splitter which is disposed in the beam path of the apparatus in such a way that a portion of the measurement beam decoupled from measurement beam splitter is incident on the focus detector.

12. Apparatus as claimed in Claim 11, **characterised in that** the measurement beam splitter is disposed between the spatial filter (11) and the interferometer in the beam path of the apparatus.

13. Apparatus as claimed in any one of Claims 1 to 10, **characterised in that** the interferometer comprises a movement intensity detector which is disposed in the beam path of the interferometer in such a way that beams superimposed in the interferometer are imaged onto it and that the movement intensity detector is the focus detector (8).

14. Apparatus as claimed in any one of Claims 6 to 13, **characterised in that** at least one optical shift element is designed as a scanning mirror (13, 14), in particular a piezoelectric scanning mirror.

15. Apparatus as claimed in any one of the preceding claims, **characterised in that** the focusing device (18) is designed as positioning slides for the objective (12), in particular piezoelectric positioning slides, wherein the positioning sides are designed in such a way that the objective (12) is movable along the axis (A) of the measurement beam of the interferometer.

16. Apparatus as claimed in any one of the preceding claims, **characterised in that** the confocal autofocus microscope has a decoupling beam splitter (16) which is disposed in the beam path of the confocal autofocus microscope for decoupling a portion of the beams from the beam path of the confocal auto-focus microscope and that the decoupling beam splitter (16) is disposed in the beam path between the object (1) and the spatial filter (11).

17. Apparatus as claimed in Claim 16, **characterised in that** the apparatus comprises a connection for other optical components, especially a C-mount connection, wherein the connection is disposed in such a way that it lies in the beam path of the beams decoupled by the decoupling beam splitter (16), and that the apparatus has an optical imaging system which comprises at least one optical element, in particular a lens, wherein the optical imaging system is disposed between the decoupling beam splitter (16) and the connection in the beam path of the beams decoupled by the decoupling beam splitter (16) and is designed in such a way that an object image of the microscope is imaged in the region of the connection.

18. Apparatus as claimed in any one of Claims 16 or 17, **characterised in that** the apparatus comprises a camera (19), in particular a CCD camera, for planar imaging of the measurement object and/or an illuminating device for planar illumination of the object (1), wherein the camera (19) and/or the illumination device are disposed in the beam path of the beams decoupled by the decoupling beam splitter (16).

19. Apparatus as claimed in Claim 18, **characterised in that** the illumination is designed as stroboscopic illumination (20, 21), and that the apparatus comprises an in-plane evaluation unit, wherein the in-plane evaluation unit is connected to the camera (19) and is designed in such a way that it evaluates a plurality of images of the camera (19) recorded with a time delay in such a way that movement of the object (1) in a plane perpendicular to the measurement beam (3) can be detected.

20. Method of optical measurement of an object (1), in particular for measurement of vibration, by means of a device as claimed in any one of the preceding claims, comprising the following steps:
- imaging of the measurement beam (3) of an interferometer onto the object (1) by means of a confocal autofocus microscope;
- adjusting a focusing device (18) of the confocal autofocus microscope by means of a focus control (17) which receives measurement signals from a focus detector (8) in such a way that the measurement point of the object (1) comes to lie at the focus of the objective (12) of the confocal autofocus microscope;
- measuring the vibrations of the object (1) in the direction of the measurement beam of the interferometer (3) by means of the interferometer and an evaluation unit (10) connected to the interferometer.

21. Method as claimed in Claim 20, comprising the following additional step:
- correcting the measurement data of the interferometer, in particular a measurement error due to the Guoy effect, by means of a correction unit (9) which is connected to the interferometer and to the evaluation unit (10).

22. Method as claimed in Claim 21, **characterised in that** the correction of the measurement data of the interferometer comprises the following steps:
- determining characteristic data of the objective (12) of the autofocus microscope;
- selecting an objective-specific calibration data set from a calibration database of the correction unit (9) which contains an objective-specific calibration data set in each case for a plurality of objective characteristic data, by means of the characteristic data of the objective (12);
- correcting the measurement error occurring due to the Guoy effect in the measurement data of the interferometer by means of the correction unit (9), wherein the correction unit (9) carries out the correction on the basis of the objective-specific calibration data set.

## Revendications

1. Dispositif pour la mesure optique d'un objet (1), en particulier pour la mesure de déplacements, comprenant
un interféromètre pour la mesure de déplacements le long de l'axe (A) du faisceau de mesure (3) de l'interféromètre et
un microscope avec un objectif (12) et un dispositif de mise au point (18), lequel dispositif de mise au point (18) est réalisé de manière que la position relative de l'objet (1) et du foyer de l'objectif (12) soit modifiable,
dans lequel l'interféromètre et le microscope sont associés ensemble de manière que le faisceau de mesure (3) de l'interféromètre soit reproduit sur l'objet (1) en passant par le chemin optique du microscope,
**caractérisé par le fait**
**que** le microscope est réalisé sous forme de microscope confocal à mise au point automatique, avec une commande de mise au point (17), un détecteur de mise au point (8) et une source lumineuse servant à générer un faisceau de mise au point,
ainsi qu'avec un filtre spatial (11) qui est disposé dans le chemin optique du microscope confocal à mise au point automatique de manière qu'il supprime essentiellement les rayons non focaux qui entrent dans l'objectif (12) depuis des points situés en dehors du foyer de l'objectif (12),
sachant que le microscope confocal à mise au point automatique est réalisé de manière que le faisceau de mise au point généré par la source lumineuse soit reproduit sur l'objet (1) et sur le détecteur de mise au point (8) en passant par l'objectif (12) et que la commande de mise au point (17) soit conçue de manière à coopérer avec le dispositif de mise au point (18) et le détecteur de mise au point (8) de manière que le détecteur de mise au point (8) délivre des signaux de mesure à la commande de mise au point (17) et la commande de mise au point (17) règle le dispositif de mise au point (18) en fonction des signaux de mesure de manière qu'un point de mesure de l'objet (1) se trouve au foyer de l'objectif (12),
et sachant que l'interféromètre est la source lumineuse servant à générer le faisceau de mise au point.

2. Dispositif selon la revendication 1,
**caractérisé par le fait**
**que** le dispositif comprend une unité de correction (9) qui est reliée à l'interféromètre et réalisée de manière à corriger les erreurs de mesure dans les données de mesure de l'interféromètre, en particulier une erreur de mesure due à l'effet Guoy.

3. Dispositif selon la revendication 2,
**caractérisé par le fait**
**que** l'unité de correction (9) contient des données de calibrage et est réalisée de manière à corriger les erreurs de mesure dans les données de mesure de l'interféromètre, en particulier une erreur de mesure due à l'effet Guoy, au moyen des données de calibrage.

4. Dispositif selon la revendication 3,
**caractérisé par le fait**
**que** le microscope contient au moins un deuxième objectif,
**que** le premier et le deuxième objectifs sont disposés sur le microscope de manière que le premier objectif puisse être remplacé au choix par le deuxième objectif et
**que** l'unité de correction (9) comprend une base de données de calibrage dans laquelle sont mémorisés au moins deux jeux de données de calibrage associés chacun à un des deux objectifs,
sachant que l'unité de correction (9) est réalisée de manière qu'il soit possible de sélectionner au choix un jeu de données de calibrage et que l'unité de correction (9) effectue la correction des données de mesure de l'interféromètre au moyen du jeu de données de calibrage sélectionné.

5. Dispositif selon l'une des revendications précédentes,
**caractérisé par le fait**
**que** le microscope confocal à mise au point automatique comprend une unité d'évaluation (10) qui est reliée à la commande de mise au point (17) et réalisée de manière à évaluer et/ou mémoriser les signaux de commande de la commande de mise au point (17), en particulier à mémoriser les signaux de commande évalués de la commande de mise au point (17).

6. Dispositif selon l'une des revendications précédentes,
**caractérisé par le fait**
**que** le microscope confocal à mise au point automatique est réalisé sous forme de microscope confocal à mise au point automatique à balayage,
lequel comprend une unité de commande de balayage et un élément de déplacement optique (13, 14) et/ou un dispositif de déplacement d'objet,
sachant que l'unité de commande de balayage est conçue de manière à coopérer avec l'élément de déplacement optique (13, 14) et/ou le dispositif de déplacement d'objet de manière que l'unité de commande de balayage règle l'élément de déplacement optique (13, 14) et/ou le dispositif de déplacement d'objet au moyen de signaux de commande de manière que le faisceau de mesure soit reproduit au choix sur au moins deux points de mesure d'emplacements différents de l'objet (1),
sachant que l'élément de déplacement optique (13, 14) est disposé dans le chemin optique du microscope confocal à mise au point automatique et réalisé de manière que le faisceau de mesure (3) puisse être déplacé et/ou incliné en fonction des signaux de commande de l'unité de commande de balayage de manière que le faisceau de mesure soit reproduit au choix sur au moins deux points de mesure d'emplacements différents de l'objet (1),
sachant que le dispositif de déplacement d'objet est réalisé de manière que l'objet (1) puisse être déplacé et/ou tourné par rapport au faisceau de mesure (3) en fonction des signaux de commande de l'unité de commande de balayage de manière que le faisceau de mesure (3) soit reproduit au choix sur au moins deux points de mesure d'emplacements différents de l'objet (1).

7. Dispositif selon les revendications 5 et 6,
**caractérisé par le fait**
**que** l'unité d'évaluation (10) est reliée à l'interféromètre et à l'unité de commande de balayage et comprend une unité de mémoire, laquelle est réalisée de manière à mémoriser
- les données de la commande de mise au point (17) qui se composent des signaux de commande de la commande de mise au point (17) et/ou des signaux de commande évalués de la commande de mise au point (17),
- les données de l'unité de commande de balayage qui se composent des signaux de commande de l'unité de commande de balayage et/ou des signaux de commande évalués de l'unité de commande de balayage et
- les données de l'interféromètre qui se composent des données de mesure de l'interféromètre et/ou des données de mesure évaluées de l'interféromètre,
sachant que l'unité de mémoire associe les unes aux autres les données de la commande de mise au point (17), les données de l'unité de commande de balayage et les données de l'interféromètre pour chaque point de mesure de l'objet (1).

8. Dispositif selon la revendication 7 et l'une des revendications 2 à 4,
**caractérisé par le fait**
**que** l'unité d'évaluation (10) est reliée à l'interféromètre via l'unité de correction (9) et
**que** l'unité de mémoire est réalisée de manière à mémoriser les données de l'interféromètre qui se composent des données de mesure corrigées de l'interféromètre.

9. Dispositif selon l'une des revendications précédentes,
**caractérisé par le fait**
**que** l'interféromètre est un vibromètre laser à effet Doppler.

10. Dispositif selon l'une des revendications précédentes,
**caractérisé par le fait**
**que** le détecteur de mise au point (8) est réalisé sous forme de photodétecteur.

11. Dispositif selon l'une des revendications précédentes,
**caractérisé par le fait**
**que** le dispositif comprend un séparateur de faisceau pour le faisceau de mesure qui est disposé dans le chemin optique du dispositif de manière qu'une part du faisceau de mesure extraite au moyen du séparateur de faisceau pour le faisceau de mesure atteigne le détecteur de mise au point.

12. Dispositif selon la revendication 11,
**caractérisé par le fait**
**que** le séparateur de faisceau pour le faisceau de mesure est disposé entre le filtre spatial (11) et l'interféromètre dans le chemin optique du dispositif.

13. Dispositif selon l'une des revendications 1 à 10,
**caractérisé par le fait**
**que** l'interféromètre comprend un détecteur d'intensité de déplacement qui est disposé dans le chemin optique de l'interféromètre de manière que des rayons superposés dans l'interféromètre soient reproduits sur lui et
**que** le détecteur d'intensité de déplacement est le détecteur de mise au point (8).

14. Dispositif selon l'une des revendications 6 à 13,
**caractérisé par le fait**
**qu'**au moins un élément de déplacement optique (13, 14) est réalisé sous forme de miroir de balayage, en particulier de miroir de balayage piézoélectrique.

15. Dispositif selon l'une des revendications précédentes,
**caractérisé par le fait**
**que** le dispositif de mise au point (18) est réalisé sous forme de chariot de positionnement pour l'objectif (12), en particulier de chariot de positionnement piézoélectrique, sachant que le chariot de positionnement est réalisé de manière que l'objectif (12) soit déplaçable le long de l'axe (A) de l'interféromètre.

16. Dispositif selon l'une des revendications précédentes,
**caractérisé par le fait**
**que** le microscope confocal à mise au point automatique présente un séparateur de faisceau d'extraction (16) qui est disposé dans le chemin optique du microscope confocal à mise au point automatique pour extraire une part des rayons du chemin optique du microscope confocal à mise au point automatique et
**que** le séparateur de faisceau d'extraction (16) est disposé dans le chemin optique entre l'objet (1) et le filtre spatial (11).

17. Dispositif selon la revendication 16,
**caractérisé par le fait**
**que** le dispositif comprend un raccord pour d'autres composants optiques, en particulier un raccord pour monture en C, sachant que le raccord est disposé de manière à se trouver dans le chemin optique des rayons extraits par le séparateur de faisceau d'extraction (16), et
**que** le dispositif présente un système de reproduction optique qui comprend au moins un élément optique, en particulier une lentille, sachant que le système de reproduction optique est disposé entre le séparateur de faisceau d'extraction (16) et le raccord dans le chemin optique des rayons extraits par le séparateur de faisceau d'extraction (16) et réalisé de manière à former une image de l'objet du microscope au niveau du raccord.

18. Dispositif selon l'une des revendications 16 ou 17,
**caractérisé par le fait**
**que** le dispositif comprend une caméra (19), en particulier une caméra CCD pour la reproduction plane de l'objet mesuré et/ou un dispositif d'éclairage pour l'éclairage plan de l'objet (1), sachant que la caméra (19) et/ou le dispositif d'éclairage sont disposés dans le chemin optique des rayons extraits par le séparateur de faisceau d'extraction (16).

19. Dispositif selon la revendication 18,
**caractérisé par le fait**
**que** l'éclairage est réalisé sous forme d'éclairage stroboscopique (20, 21) et
**que** le dispositif comprend une unité d'évaluation en plan, sachant que l'unité d'évaluation en plan est reliée à la caméra (19) et réalisée de manière à évaluer plusieurs images de la caméra (19) enregistrées de façon décalée dans le temps de manière à pouvoir saisir un déplacement de l'objet (1) dans un plan perpendiculaire au faisceau de mesure (3).

20. Procédé pour la mesure optique d'un objet (1), en particulier pour la mesure de vibrations, au moyen d'un dispositif selon l'une des revendications précédentes,
comprenant les étapes suivantes :
- reproduction du faisceau de mesure (3) d'un interféromètre sur l'objet (1) au moyen d'un microscope confocal à mise au point automatique ;
- réglage d'un dispositif de mise au point (18) du microscope à mise au point automatique au moyen d'une commande de mise au point (17) qui reçoit des signaux de mesure d'un détecteur de mise au point (8) de manière que le point de mesure de l'objet (1) se trouve au foyer de l'objectif (12) du microscope confocal à mise au point automatique ;
- mesure des vibrations de l'objet (1) en direction du faisceau de mesure de l'interféromètre (3) au moyen de l'interféromètre et d'une unité d'évaluation (10) reliée à l'interféromètre.

21. Procédé selon la revendication 20,
comprenant l'étape supplémentaire suivante :
- correction des données de mesure de l'interféromètre, en particulier d'une erreur de mesure due à l'effet Guoy, au moyen d'une unité de correction (9) qui est reliée à l'interféromètre et à l'unité d'évaluation (10).

22. Procédé selon la revendication 21,
**caractérisé par le fait**
**que** la correction des données de mesure de l'interféromètre comprend les étapes suivantes :
- détermination de données caractéristiques de l'objectif (12) du microscope à mise au point automatique ;
- sélection, au moyen des données caractéristiques de l'objectif (12), d'un jeu de données de calibrage spécifique à l'objectif dans une base de données de calibrage de l'unité de correction (9) qui contient chaque fois un jeu de données de calibrage spécifique à l'objectif pour plusieurs données caractéristiques de l'objectif ;
- correction, au moyen de l'unité de correction (9), de l'erreur de mesure apparaissant dans les données de mesure par suite de l'effet Guoy, sachant que l'unité de correction (9) effectue la correction sur la base du jeu de données de calibrage spécifique à l'objectif.
